# EUROPEAN PATENT APPLICATION

(11) **EP 4 588 361 A1**
(43) Date of publication of application: **23.07.2025**
(21) Application number: 23865388.5
(22) Date of filing: 07.09.2023
(51) Int. Cl.: A23L 11/00, A23G 1/34, A23G 1/48

(54) **CHOCOLATE-LIKE FOOD**

(30) Priority: 15.09.2022 JP 2022146648
(71) Applicant: Fuji Oil Holdings Inc., Izumisano-shi, Osaka 598-8540 (JP)
(72) Inventor: MIYAZAKI, Chiaki, Tsukubamirai-shi, Ibaraki 300-2436 (JP); SUGIYAMA, Masahiro, Tsukubamirai-shi, Ibaraki 300-2436 (JP)
(74) Representative: Boult Wade Tennant LLP
(86) International application number: PCT/JP2023/032597
(87) International publication number: WO 2024/058033

(57) **Abstract**

An objective is to provide a novel chocolate-like food excellent in flavor even when a component derived from cacao is reduced, and to provide a legume-derived roasted powder usable in the chocolate-like food. The objective can be achieved by using a method for producing a legume-derived roasted powder for use in a chocolate-like food, the method including all of the following steps 1) to 3): 1) grinding a legume; 2) mixing a saccharide and an amino acid with water; and 3) adding a mixture of 2) to a ground legume product obtained in 1), stirring, and roasting.

## Description

### Technical Field

### Related Application

This application claims the benefit of priority from the Japanese Patent Application No. 2022-146648 filed with the Japan Patent Office on September 15, 2022. The priority application is incorporated herein by reference in its entirety.

The present invention relates to a chocolate-like food and a method for producing the chocolate-like food.

### Background Art

Chocolate, a type of chocolate-like food, is composed of, for example, ingredients derived from cacao, such as cocoa mass, cocoa butter, or cocoa powder, as well as sugar and is enjoyed for its unique flavor and texture and consumed worldwide. However, areas and environments where cacao can be harvested are limited, and chocolate produced using cacao as a main raw material is expensive. Therefore, technology development is taking place to substitute cacao with other raw materials.

Studies are being conducted to obtain an alternative material for cocoa butter, which is one of the components derived from cacao, by subjecting palm oil or the like to fractionation or interesterification, and such an alternative material are now available at a lower cost than cocoa butter.

Patent Document 1 discloses, as a cocoa powder substitute, a chocolate-like food containing a soybean protein extraction residue as a main component.

Non-Patent Document 1 discloses carob as a substitute for cacao raw material.

### Citation List

### Patent Documents

Patent Document 1: JP 2015-027280 A

### Non-Patent Document

Non-Patent Document 1: Lanfranchi et al., Quality-Access to Success, Vol. 20, No. 168 (2019) 148-153

### Summary of Invention

### Technical Problem

The present inventors have studied a novel chocolate-like food that has a reduced amount of component derived from cacao.

The method described in Patent Document 1 has an issue in terms of flavor.

The material described in Non-Patent Document 1 is insufficient because an off-taste is felt or a lack of flavor is felt.

Thus, an object of the present invention is to provide a novel chocolate-like food having a reduced amount of component derived from cacao and also having an excellent flavor. Another object is to provide a legume-derived roasted powder for use in the chocolate-like food.

### Solution to Problem

As a result of intensive studies to solve the above-described issues, the present inventors have completed the present invention by preparing a chocolate-like food by refining and mixing, together with a saccharide, a legume-derived roasted powder obtained by roasting a ground legume product, a saccharide, and an amino acid in a moisture-containing atmosphere.

That is, the present invention relates to:
(1) A method for producing a legume-derived roasted powder for use in a chocolate-like food, the method including all of the following steps:
   1) grinding a legume; 2) mixing a saccharide and an amino acid with water; and 3) adding a mixture of 2) to a ground legume product obtained in 1), stirring, and roasting;
(2) A method for producing a chocolate-like food using the legume-derived roasted powder according to (1), the method including the following steps of:
   4) mixing the legume-derived roasted powder with a saccharide and a part of an oil and/or fat and refining the resulting mixture; and 5) adding the remaining oil and/or fat and an emulsifier thereto, and stirring;
(3) The method for producing a legume-derived roasted powder according to (1), wherein a moisture content of the legume-derived roasted powder before roasting is from 5 to 30 mass%;
(4) The method for producing a legume-derived roasted powder according to (1), wherein an alkali agent is mixed when the saccharide and the amino acid are mixed with the water;
(5) The method for producing a legume-derived roasted powder according to (1), wherein, when the ground legume product and the mixture containing the saccharide and the amino acid are stirred, an oil and/or fat component is mixed, and the resulting mixture is roasted;
(6) The method for producing a chocolate-like food according to (2), wherein a content of fat-free cocoa solids is less than 5 mass%; and
(7) The method for producing a chocolate-like food according to (2), wherein the chocolate-like food is free of fat-free cocoa solid contents.

In other words, the present invention relates to:
(11) A method for producing a legume-derived roasted powder for use in a chocolate-like food, including all of the following steps 1) to 3):
   1) grinding a legume; 2) mixing a saccharide and an amino acid with water; and 3) adding a mixture of 2) to a ground legume product obtained in 1), stirring, and roasting;
(12) A method for producing a chocolate-like food using the legume-derived roasted powder according to (11), further including the step of: 4) mixing and refining the legume-derived roasted powder, a saccharide, and a molten oil and/or fat;
(13) The method for producing a legume-derived roasted powder according to (11), wherein a moisture content of the legume-derived roasted powder before roasting is from 5 to 30 mass%;
(14) The method for producing a legume-derived roasted powder according to (11), wherein an alkali agent is mixed in the step 2) of mixing a saccharide and an amino acid with water;
(15) The method for producing a legume-derived roasted powder according to (11), wherein, in the step 3) of stirring a mixture containing a saccharide and an amino acid with a ground legume product, an oil and/or fat component is mixed, and the resulting mixture is roasted;
(16) The method for producing a legume-derived roasted powder according to (11), wherein two or more amino acids are contained as the amino acid mixed in the step 2), and at least one of the amino acids is a hydrophobic amino acid;
(17) The method for producing a legume-derived roasted powder according to (14) or (15), wherein two or more amino acids are contained as the amino acid mixed in the step 2), and at least one of the amino acids is a hydrophobic amino acid;
(18) A method for producing a chocolate-like food using the legume-derived roasted powder according to (14) or (15), further including the step of: 4) mixing and refining the legume-derived roasted powder, a saccharide, and a molten oil and/or fat;
(19) A method for producing a chocolate-like food using the legume-derived roasted powder according to (16), the method further including the following step of: 4) mixing and refining the legume-derived roasted powder, a saccharide, and a molten oil and/or fat;
(20) A method for producing a chocolate-like food using the legume-derived roasted powder according to (17), the method further including the following step of: 4) mixing and refining the legume-derived roasted powder, a saccharide, and a molten oil and/or fat;
(21) The method for producing a chocolate-like food according to (12), wherein a content of fat-free cocoa solids is 0 mass% or more and less than 5 mass%;
(22) The method for producing a chocolate-like food according to (12), wherein a content of fat-free cocoa solids is 0 mass% or more and less than 1 mass%;
(23) The method for producing a chocolate-like food according to (18), wherein a content of fat-free cocoa solids is 0 mass% or more and less than 1 mass%;
(24) The method for producing a chocolate-like food according to (19), wherein a content of fat-free cocoa solids is 0 mass% or more and less than 1 mass%; and
(25) The method for producing a chocolate-like food according to (20), wherein a content of fat-free cocoa solids is 0 mass% or more and less than 1 mass%.

### Advantageous Effects of Invention

According to the present invention, it is possible to provide a novel chocolate-like food excellent in flavor even when a component derived from cacao is reduced, and to provide a legume-derived roasted powder usable in the chocolate-like food.

Furthermore, the legume-derived roasted powder of the present invention can be used to provide a chocolate-like food product without using a component derived from cacao. The resulting chocolate-like food product has a flavor typical of chocolate containing cacao without giving a strange flavor of legumes.

### Description of Embodiments

The legume according to an embodiment of the present invention is derived from the whole and/or a part of a bean which is in a seed state of the legume, and the ground legume product refers to all ground products of the legume.

The legume according to an embodiment of the present invention refers to legumes derived from Fabaceae plants and Faboideae plants. Specific examples of the legume can include soybean, mung bean, common bean (Phaseolus vulgaris), pea, scarlet runner bean, adzuki bean, and chickpea.

The legume is preferably soybean, mung bean, common bean (Phaseolus vulgaris), pea, scarlet runner bean, or adzuki bean; more preferably soybean, mung bean, common bean (Phaseolus vulgaris), pea, or scarlet runner bean; even more preferably mung bean, common bean (Phaseolus vulgaris), pea, or scarlet runner bean, and more preferably common bean (Phaseolus vulgaris), pea, or scarlet runner bean. These legumes are preferred in that a flavor suitable for the chocolate-like food is obtained.

The ground legume product can be obtained by subjecting a legume to a crusher such as a millser or a grinder, or a commercially available product produced by grinding a legume may be purchased.

An example of the ground product is a powder. In the case of preparing a chocolate-like food, a powdery material is easy to mix and suitably used.

The chocolate-like food according to an embodiment of the present invention uses a legume-derived roasted powder obtained by adding a mixture of a saccharide and an amino acid with water to the ground legume product, stirring the mixture, and roasting the mixture. The legume-derived roasted powder is suppressed in an odor peculiar to legumes, i.e., so-called bean odor. The use of the legume-derived roasted powder can provide a chocolate-like food having a good flavor. The legume-derived roasted powder can be appropriately adjusted by confirming the quality of the chocolate-like food. Preferably, roasting conditions can be set according to the color tone and flavor of the legume-derived roasted powder.

The chocolate-like food according to an embodiment of the present invention refers to a food material which contains an oil and/or fat as a continuous phase and a saccharide and the like as a dispersed phase, and which does not substantially contain water except for a small amount of moisture contained in the raw material. The chocolate-like food contains a legume-derived roasted powder obtained by roasting a ground legume product, a saccharide and an amino acid, and an unroasted saccharide.

An example of the chocolate-like food include chocolates or related products. The chocolates or related products referred to herein refer to not only chocolates, quasi-chocolates, and chocolate-based foods defined by the Japan National Chocolate Industry Fair Trade Council and the Chocolate-Based Food Fair Trade Council but also products containing an oil and/or fat as an essential component and blended with an auxiliary raw materials, such as a saccharide, a powder milk, a cacao raw material (cocoa mass, cocoa powder, or cocoa butter), a dietary fiber, a fruit juice powder, a fruit powder, a tasting material, an emulsifier, a flavor, or a colorant in any proportion.

As the saccharide that can be used in roasting in an embodiment of the present invention, examples of monosaccharides can include glucose, fructose, galactose, and xylose. Examples of disaccharides can include sugar (sucrose), lactose, and maltose. In addition, a sugar alcohol, an oligosaccharide, or the like may be blended as necessary. At least one selected from the group of those can be used.

The saccharide used during roasting is preferably a monosaccharide such as glucose, fructose or xylose, and more preferably fructose or glucose. When the saccharide is used in the form of an aqueous saccharide solution, examples of the aqueous saccharide solution can include aqueous fructose solutions, aqueous glucose solutions, fructose-glucose syrup, honey, brown sugar, and brown sugar syrup. Among these, fructose, glucose, an aqueous fructose solution, an aqueous glucose solution, fructose-glucose syrup, or honey is preferable in that color tones and flavors suitable for chocolate-like foods are obtained. Such saccharides may be used in combination.

The use of the saccharide in roasting can provide a chocolate-like food excellent in flavor and a legume-derived roasted powder usable in the chocolate-like food.

The saccharide that can be used in roasting in an embodiment of the present invention is preferably an aqueous saccharide solution, and an aqueous monosaccharide solution is more preferably used. Examples of the monosaccharide used in the aqueous monosaccharide solution can include glucose, fructose, galactose, and xylose. The monosaccharide is preferably glucose, fructose, or xylose, and more preferably fructose or glucose. The use of aqueous monosaccharide solutions using these monosaccharides is preferable in that color tones and flavors suitable for chocolate-like foods can be obtained. Such saccharides may be used in combination. Honey, brown sugar, and the like containing the component described above can also be used without limitation.

The use of the aqueous saccharide solution in roasting can provide a chocolate-like food excellent in flavor and a legume-derived roasted powder usable in the chocolate-like food.

In particular, it is possible to provide a chocolate-like food which does not give bean odor and has a good color tone without using a component derived from cacao.

The use of the legume-derived roasted powder used in an embodiment of the present invention makes it possible to prepare chocolates or related products having a good flavor even when a content of fat-free cocoa solids is 0 mass% or more and less than 5 mass%. Furthermore, chocolates or related products having a good flavor can be prepared even if the content of fat-free cocoa solids is less than 1 mass% and it does not substantially contain cocoa mass or cocoa powder. Note that the fat-free cocoa solids refer to a portion of solids derived from cocoa beans excluding cocoa butter and moisture.

The chocolates or related products generally contain a large amount of cocoa mass or cocoa powder which is a raw material derived from cacao. The cocoa mass and cocoa powder are produced by processing, such as roasting, cocoa beans. However, cocoa is a plant of the Malvaceae family, and the cocoa beans and cocoa-derived raw materials are excluded from the legume according to an embodiment of the present invention.

In addition to the cocoa butter, examples of the oil and/or fat that can be used in an embodiment of the present invention can include vegetable oils and/or fats, such as rapeseed oil, high erucic rapeseed oil, soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid-bound oils and/or fats (MCT), shea butter, and sal fat; animal oils and/or fats, such as milk fat, beef tallow, lard, fish oil, and whale oil; algal oils; and hydrogenated oils, fractionated oils, hydrogenated fractionated oils, fractionated hydrogenated oils, processed oils and/or fats obtained by interesterification and/or the like of those; and furthermore mixed oils and/or fats of these.

In the chocolate-like food according to an embodiment of the present invention, a cocoa butter alternative can be used to give a preferred hardness. On the other hand, an oil and/or fat having a low melting point, such as rapeseed oil, soybean oil or palm soft oil can be used in combination for imparting softness of filling, spread or the like.

The cocoa butter alternative is also called hard butter, and its type may be either a tempering type or a non-tempering type. According to various qualities required for the chocolate-like food, any other oil and/or fat can be appropriately selected and used in combination.

Amino acids that can be used in an embodiment of the present invention are not particularly limited as long as they are organic compounds having both amino (-NH₂) and carboxyl (-COOH) functional groups, and can be appropriately selected from amino acids that constitute proteins. Specific examples of the amino acid include leucine, valine, tryptophan, isoleucine, phenylalanine, alanine, methionine, proline, glycine, cysteine, aspartic acid, glutamic acid, glutamine, arginine, asparagine, tyrosine, histidine, lysine, serine, and threonine.

These amino acids are mainly classified into hydrophobic amino acids and hydrophilic amino acids depending on the nature of the side chain. Without limitation to amino acids having these properties, any amino acid can be widely used. A single amino acid may be used, or two or more amino acids may be appropriately combined. The use of a combination of a plurality of amino acids tends to be more preferable than the use of a single amino acid because the flavor of the chocolate-like food does not become monotonous and the body is felt.

More preferably, at least one hydrophobic amino acid is used in a combination of a plurality of amino acids. Examples of the hydrophobic amino acid include leulin, valine, tryptophan, isoleucine, phenylalanine, alanine, methionine, cysteine, and tyrosine. Leucine, valine, isoleucine, phenylalanine, and alanine are preferably used as the hydrophobic amino acid.

The use of the amino acid can provide a chocolate-like food excellent in flavor and a legume-derived roasted powder usable in the chocolate-like food.

An amount of the amino acid added during roasting is preferably from 0.1 to 1 g, more preferably from 0.15 to 0.6 g, and most preferably from 0.15 to 0.5 g relative to 100 g of the ground legume product.

In other words, the amount of the amino acid added during roasting is preferably from 0.01 mass% to 1 mass%, more preferably from 0.02 mass% to 0.9 mass%, or from 0.03 mass% to 0.8 mass%, and still more preferably from 0.04 mass% to 0.7 mass%, or from 0.05 mass% to 0.6 mass% as a charged amount for producing the legume-derived roasted powder.

In a preferred embodiment of the present invention, an alkali agent is used during roasting. Examples of a method for mixing the alkali agent can include a method in which the alkali agent is dissolved in water or an aqueous saccharide solution to be used in roasting and the resulting solution is mixed with the ground legume product and the like.

Examples of the alkali agent used in an embodiment of the present invention can include sodium hydroxide, potassium carbonate, potassium hydroxide, sodium hydrogen carbonate, and sodium carbonate. An amount of the alkali agent to be added varies depending on the type of legume, and thus is not particularly limited. However, it is preferable to add from 0.5 to 5.0 mass% of the alkali agent to the ground legume product during roasting and to adjust the pH to about from 5.0 to 7.0.

The use of the alkali agent provides a remarkable effect of suppressing an odor peculiar to legumes, i.e., so-called bean odor. Furthermore, a caramel-like flavor can be imparted, and thus the rich taste of the chocolate-like food is strengthened and the flavor typical of chocolate is increased.

The pH can be confirmed by measuring the pH of a supernatant obtained by diluting the legume-derived roasted powder ten times with distilled water.

The roasting method referred to in the present invention refers to a method in which water and/or an aqueous saccharide solution are/is added at the time of mixing a ground legume product and the like, and the resulting mixture is roasted in a state of containing moisture. The mixture containing moisture is in the form of small lumps like minced meat and is in a state of being loosened upon touch.

The mixture in the form of small lumps like minced meat before roasting preferably contains from 5 to 30 mass% of moisture. The moisture content is more preferably from 7 to 28 mass%, and most preferably from 10 to 25 mass%. By adjusting the moisture content of the mixture to an appropriate range, flavor adjustment during roasting is facilitated.

Since most of the moisture added during roasting evaporates, the moisture content of the legume-derived roasted powder is about from 0 to 5 mass%.

The moisture content of the legume-derived roasted powder can be measured by an analysis method such as a sea sand method.

Equipment used for roasting is not particularly limited, but is preferably equipped with a stirring blade because mixing and heating can be uniformly performed. A heat source may be either gas heating or induction heating as long as the temperature can be controlled. The heat source is preferably induction heating from the viewpoint of easy temperature control.

In addition, when there is no stirring blade, the roasting can be performed in a state where the mixture is spread on a flat dish or the like and can be uniformly heated.

The roasting temperature and time can be adjusted by observing the color tone of the ground legume product and saccharide during roasting and thus are not limited. However, the roasting conditions are exemplified by a temperature preferably of from 100°C to 250°C, more preferably of from 110°C to 230°C, and still more preferably of from 120°C to 200°C.

The roasting time is preferably 10 minutes or more and more preferably 20 minutes or more from the viewpoint that a fragrant flavor and a deep color tone can be imparted, and that a flavor typical of cacao can be imparted. The roasting temperature and time vary depending on the equipment used for roasting and thus are not limited to the temperatures and time described above, and can be appropriately adjusted and employed according to the color tones and flavors of the ground legume product and saccharide after roasting.

The legume-derived roasted powder according to an embodiment of the present invention may be dried to evaporate moisture, as necessary, together with roasting. The temperature and time in the case of performing drying are not particularly limited, and drying can be performed at a temperature lower than that during roasting depending on the flavor and color tone.

Examples of drying conditions include drying at from 80 to 130°C for about 10 minutes. The drying can be performed, whereby a legume-derived roasted powder having a predetermined moisture amount can be obtained.

The color tone of the legume-derived roasted powder can be visually determined. For the degree of roasting, heating conditions can be adjusted using an L* value in color tone as an indicator. The L* value in color tone is not particularly limited either but is measured using a color difference meter. The color difference meter is exemplified by a colorimetric color difference meter (ZE-6000 available from Nippon Denshoku Industries Co., Ltd.).

As a preferred aspect, in the chocolate-like food product according to an embodiment of the present invention, the color tone L* value of the legume-derived roasted powder to be used is preferably from 40 to 60.

Adjusting the L* value in color tone to a predetermined range enables preparation of novel chocolate-like foods adjusted to various color tones while having a good flavor.

In the present invention, the color tone refers to a color tone represented by the CIE1976 color system in the L*a*b* color space. More specifically, the L*a*b* color space is a standard representing a color of an object, which is also adopted in Japan as JIS (JIS Z 8714-4), in which lightness is represented by L*, and chromaticities representing hue and saturation are represented by a* and b*.

As described above, the chocolate-like food according to an embodiment of the present invention uses a legume-derived roasted powder, but as a preferable aspect, an oil and/or fat component is further blended in the step of roasting a ground legume product and a saccharide, from the viewpoint of improving the flavor. Examples of the oil and/or fat component that can be used include various edible oils and/or fats. A more preferred oil and/or fat component that can be used is a phospholipid-containing edible oil and/or fat.

By further blending an oil and/or fat component in the roasting step, a flavor typical of chocolate can be more remarkably felt without using a component derived from cacao. In addition, the effect of suppressing bean odor is also remarkable.

As the saccharide to be added to the chocolate-like food in an embodiment of the present invention, monosaccharides, disaccharides and the like can be used. Specific examples can include sugar (sucrose), lactose, maltose, glucose, and a sugar alcohol. An oligosaccharide or the like may be blended as necessary. At least one selected from the group of those can be used, and the saccharide is preferably in the form of powder from the viewpoint of handling.

A content of the saccharide to be added to the chocolate-like food in the chocolate-like food is preferably 0.5 mass% or more, more preferably 0.6 mass% or more, and still more preferably 10 mass% or more, 15 mass% or more, or 20 mass% or more. The content of the saccharide in the chocolate-like food is preferably 60 mass% or less, more preferably 57 mass% or less, and still more preferably 55 mass% or less or 50 mass% or less.

A content of the legume-derived roasted powder in the chocolate-like food is preferably 5 mass% or more, 7 mass% or more, or 10 mass% or more, more preferably 12 mass% or more, and still more preferably 15 mass% or more. In addition, the content of the legume-derived roasted powder in the chocolate-like food is preferably 50 mass% or less, or 48 mass% or less, more preferably 45 mass% or less, and still more preferably 40 mass% or less.

By setting the content of the legume-derived roasted powder to a preferable content, a good flavor can be imparted to the chocolate-like food. In particular, the chocolate-like food can be imparted with a flavor as derived from cacao, which is peculiar to chocolate.

A raw material used in the chocolate-like food can be used without particular limitation except that the chocolate-like food contains the legume-derived roasted powder and the unroasted saccharide. The composition of chocolate, as a representative chocolate-like food, can also be applied as a reference. In one instance, a milk component, an oil and/or fat, and/or any other edible material can be appropriately combined. Examples of any other additive include an emulsifier, an antioxidant, and a flavor, but the type and amount are not limited, and addition of these may be omitted.

The chocolate-like food according to an embodiment of the present invention can be produced by a production process of chocolates or related products (such as a mixing step, rolling, conching treatment, and a molding cooling and solidifying step). As a production method, a general method for producing chocolates or related products, such as a production method in which mixing and refining treatment is performed using a ball mill, a bead mill, or the like, can be used.

As an example of the production method, it is possible to use a production method including a mixing step, an refining step (roll-refining), a conching step (conching treatment), a cooling step, and the like using an oil and/or fat, a saccharide, a legume-derived roasted powder, cocoa mass, a dairy product, a flavor, an emulsifier, and the like as raw materials. In addition, as another example, it is possible to use a production method including a step of mixing the same raw materials as those described above, a refining step (grinding using a ball mill or a bead mill), a stirring step, a cooling step, and the like.

### Examples

Hereinbelow, the present invention will be described more in detail, by presenting Examples. Incidentally, in the examples, both % and parts are meant to be on mass basis.
o Study 1 - Addition of Sugar and Amino Acid
   - Method for Preparing Legume-derived Roasted Powder
      • Black turtle beans as a legume were ground using a commercially available coffee mill and used in a powder form.
      • Raw materials listed in Table 1 were added and mixed.
      • At the time of mixing, water, a saccharide, lecithin, and amino acids were mixed in advance and then mixed with the ground products of black turtle beans. All the mixtures had a moisture content of from 12.0 to 18.0 mass% as measured by the sea sand method.
      • The mixtures were spread flat in a deep rectangular stainless steel vat to a thickness of about from 2 to 6 mm.
      • Roasting was performed at 140°C for 30 minutes using an oven (DKM600 available from Yamato Scientific Co., Ltd.).
   - Method for Preparing Chocolate-like Food

The legume-derived roasted powder was blended with all powders and oil and/or fat according to the raw material proportions of the representative formulation shown in Table 2 to prepare a chocolate-like food in the following manner.
- In the raw materials shown in Table 2, powders were subjected to refining treatment using Shake Master Auto (Biomedical Science Co., Ltd.), and a molten oil and/or fat, lecithin and the like were added thereto and mixed for liquification.
- The resulting chocolate-like food had a solid particle size of from 20 to 30 µm.
- The liquefied chocolate-like food was poured into a mold and solidified at 5°C.

As a chocolate-like food product comparative example, a chocolate-like food product using carob powder in the formulation shown in Table 2, separately from the legume-derived roasted powder, was prepared.

As a reference example, a chocolate-like food using cocoa powder was prepared.

Chocolate-like foods were prepared in accordance with the ratio of the representative formulation shown in Table 2 except for Chocolate-like Food Comparative Example (3) and Reference Example.

For the particle size measurement, a micrometer (trade name "Digimatic Standard Outer Micrometer MDC-25PJ" available from Mitutoyo Corporation) was used.

A hard butter (trade name "Parkena S" available from Fuji Oil Co., Ltd.) was used as the oil and/or fat.

The carob powder used was commercially available organic carob powder.

The honey, cocoa powder, whole milk powder and sugar used were commercially available products.

As the lecithin, soybean lecithin paste (trade name "SLP-Paste" available from Tsuji Oil Mills Co., Ltd.) was used.

The amino acids to be added were of food additive grade. The types of amino acids are shown below.

Amino acid (A): a mixture of five hydrophobic amino acids L-alanine, L-valine, L-leucine, L-isoleucine, and L-phenylalanine in an equal mass ratio;

Amino acid (B) a mixture of five hydrophilic amino acid-based compounds L-lysine hydrochloride, L-threonine, L-serine, L-glutamic acid, and L-tyrosine in an equal mass ratio.

### • Evaluation of Color Tone

The color tone of the legume-derived roasted powder was measured using a colorimetric color difference meter ZE-6000.
○: The L* value was from 40 to 60. Good
×: The L* value was above 60 or below 40. Unsuitable.

- Method for evaluating Chocolate-like Food
   - The flavor of the chocolate-like food was evaluated after the food was allowed to stand in a room at from 18 to 20°C for 1 hour or more.
   - The flavor was evaluated by sensory evaluation by three trained panelists according to the following criteria, and the average was used as the final evaluation.

### • Evaluation of Flavor

The flavor of the chocolate-like food was evaluated according to the following criteria to determine whether it had a good flavor as a chocolate-like food. In addition, the flavor typical of chocolate was evaluated as chocolate sensation, with the flavor of the chocolate-like food using cocoa powder in Reference Example being scored as 5. In all the evaluations, a score of 3 or higher was regarded as acceptable.

### • Evaluation of Chocolate-like Food

5: Very good with almost no bean odor felt.
4: Good with bean odor slightly felt.
3: Acceptable level with bean odor somewhat felt.
2: Unsuitable with bean odor considerably felt.
1: Unsuitable with bean odor strongly felt.

### • Evaluation of Chocolate Sensation

5: Chocolate flavor.
4: Cocoa-like flavor reminiscent of chocolate was strongly felt.
3: Cacao-like flavor reminiscent of chocolate was felt.
2: Almost no chocolate flavor.
1: No chocolate-like flavor.

- Overall Evaluation
   - Chocolate-like foods, which were evaluated for color tone as "○" and evaluated for both chocolate-like food and chocolate sensation as 3 or more, and did not meet the criterion "⊚: Very good", were overall-evaluated as "○: Good".
   - Chocolate-like foods, which were evaluated for color tone as "○" and evaluated for both chocolate-like food and chocolate sensation as 4 or more were overall-evaluated as "⊚: Very good".
   - Chocolate-like foods, which did not meet the criteria for overall evaluation of "○" or "⊚", were overall-evaluated as "×: Not acceptable".

The overall evaluation of the chocolate-like foods is shown in Table 3.

In the tables, "Roasted Comparative Examples" or "Roasted Examples" indicate studied products of legume-derived roasted powder, and "Chocolate-like Food Comparative Examples" or " Chocolate-like Food Examples" indicate studied products of chocolate-like food.

**[Table 1]**

| | Roasted Comparative Example 1 | Roasted Comparative Example 2 | Roasted Example 1 | Roasted Example 2 |
|---|---|---|---|---|
| Black turtle bean powder [parts] | 84.70 | 87.70 | 69.90 | 69.90 |
| Honey [parts] | 0 | 0 | 17.50 | 17.50 |
| Water [parts] | 12.70 | 12.70 | 10.50 | 10.50 |
| Lecithin [parts] | 2.60 | 2.60 | 2.10 | 2.10 |
| Amino acid (A) [parts] | 0 | 0.21 | 0.21 | 0 |
| Amino acid (B) [parts] | 0 | 0 | 0 | 0.21 |
| Moisture content [%] after roasting | 0.2 | 4.3 | 3.7 | 3.2 |
| L* value | ×: 71.15 | ×: 70.00 | ○: 51.11 | ○: 45.93 |

The lecithin and amino acids in the table were added to water or honey, and then the mixture was mixed with the ground legume product, and roasted.

**[Table 2]**

| | Representative Formulation | Chocolate-like Food Comparative Example (3) formulation | Reference example formulation |
|---|---|---|---|
| Roasted powder [parts] | 20.0 | 0 | 0 |
| Carob powder [parts] | 0 | 30.8 | 0 |
| Cocoa powder [parts] | 0 | 0 | 20.0 |
| Sugar [parts] | 35.0 | 24.2 | 35.0 |
| Vegetable oil and/or fat (A) [parts] | 45.0 | 45.0 | 45.0 |
| Lecithin [parts] | 0.15 | 0.15 | 0.3 |

**[Table 3]**

| | Chocolate-like Food Comparative Example (1) | Chocolate-like Food Comparative Example (2) | Chocolate-like Food Example (1) | Chocolate-like Food Example (2) | Chocolate-like Food Comparative Example (3) | Reference Example |
|---|---|---|---|---|---|---|
| Roasted powder used | Roasted Comparative Example 1 | Roasted Comparative Example 2 | Roasted Example 1 | Roasted Example 2 | None (carob) | None (cocoa) |
| Moisture content [%] | 1.6 | 1.6 | 1.5 | 1.5 | 2.8 | 1.5 |
| Chocolate-like food flavor | 1 | 2 | 4 | 4 | 3 | 5 |
| Chocolate sensation | 1 | 1 | 4 | 3 | 2 | 5 |
| Overall evaluation | ×: Not acceptable | ×: Not acceptable | ⊚: Very good | O: Good | ×: Not acceptable | ⊚: Very good |

Honey and amino acids were mixed during roasting of the ground legume product, and thus the flavor of the chocolate-like foods was improved. The chocolate-like foods gave a chocolate flavor perception.

When carob powder was used, the flavor was at an acceptable level as a chocolate-like food, but was insufficient as the flavor typical of chocolate.
o Study 2 - Change of Legume
   - The same study as Study 1 was conducted using scarlet runner beans, red kidney beans, canary beans, and adzuki beans instead of black turtle beans. The moisture content of the mixture before roasting was from 13.0 to 18.0 mass%.
   - Chocolate-like foods were prepared according to the typical formulation described in "● Method for Preparing Chocolate-like Food" presented above, and evaluated according to "● Method for evaluating Chocolate-like Food".

**[Table 4]**

| | Roasted Example 1 | Roasted Example 3 | Roasted Example 4 | Roasted Example 5 | Roasted Example 6 |
|---|---|---|---|---|---|
| Black turtle bean powder [parts] | 69.90 | 0 | 0 | 0 | 0 |
| Scarlet runner bean powder [parts] | 0 | 69.90 | 0 | 0 | 0 |
| Red kidney bean powder [parts] | 0 | 0 | 69.90 | 0 | 0 |
| Canary bean powder [parts] | 0 | 0 | 0 | 69.90 | 0 |
| Adzuki bean powder [parts] | 0 | 0 | 0 | 0 | 69.90 |
| Honey [parts] | 17.50 | 17.50 | 17.50 | 17.50 | 17.50 |
| Water [parts] | 10.50 | 10.50 | 10.50 | 10.50 | 10.50 |
| Lecithin [parts] | 2.10 | 2.10 | 2.10 | 2.10 | 2.10 |
| Amino acid (A) [parts] | 0.21 | 0.21 | 0.21 | 0.21 | 0.21 |
| Moisture content [%] after roasting | 3.7 | 3.7 | 4.1 | 3.9 | 3.9 |
| L* value | ○: 51.11 | O: 48.00 | ○: 49.94 | ○: 49.19 | ○: 51.30 |

**[Table 5]**

| | Chocolate-like Food Example (1) | Chocolate-like Food Example (3) | Chocolate-like Food Example (4) | Chocolate-like Food Example (5) | Chocolate-like Food Example (6) |
|---|---|---|---|---|---|
| Roasted powder used | Roasted Example 1 | Roasted Example 3 | Roasted Example 4 | Roasted Example 5 | Roasted Example 6 |
| Moisture content [%] | 1.6 | 1.6 | 1.5 | 1.5 | 1.6 |
| Chocolate-like food flavor | 4 | 5 | 4 | 4 | 3 |
| Chocolate sensation | 4 | 4 | 3 | 3 | 3 |
| Overall evaluation | ⊚: Very good | ⊚: Very good | O: Good | O: Good | O: Good |

Even when the type of legumes was changed, a similarly good flavor was obtained. When honey and amino acids were added and the mixtures were roasted, materials with the chocolate flavor felt were obtained.
o Study 3 - Change of Sugar
   - The same study as Study 1 was conducted in the case where a fructose-glucose syrup or an aqueous fructose solution was used as the saccharide instead of honey, and in the case where fructose and water were used in the formulation.
   - The aqueous fructose solution used was a solution having a concentration of 33 mass%.

The moisture content of the mixture before roasting was from 15.0 to 24.0 mass%.
- Chocolate-like foods were prepared according to the typical formulation described in "● Method for Preparing Chocolate-like Food" presented above, and evaluated according to "● Method for evaluating Chocolate-like Food".

**[Table 6]**

| | Roasted Example 7 | Roasted Example 8 | Roasted Example 9 | Roasted Example 10 |
|---|---|---|---|---|
| Black turtle bean powder [parts] | 69.90 | 69.90 | 69.90 | 69.90 |
| Honey [parts] | 17.50 | 0 | 0 | 0 |
| Fructose-glucose syrup [parts] | 0 | 19.10 | 0 | 0 |
| Aqueous fructose solution [parts] | 0 | 0 | 28.00 | 0 |
| Fructose [parts] | 0 | 0 | 0 | 9.20 |
| Water [parts] | 10.50 | 8.90 | 0 | 18.80 |
| Lecithin [parts] | 2.10 | 2.10 | 2.10 | 2.10 |
| Amino acid (A) [parts] | 0.21 | 0.21 | 0.21 | 0.21 |
| Moisture content [%] after roasting | 3.7 | 2.5 | 1.2 | 0.9 |
| L* value | ○: 51.11 | ○: 50.80 | ○: 50.88 | ○: 48.15 |

**[Table 7]**

| | Chocolate-like Food Example (7) | Chocolate-like Food Example (8) | Chocolate-like Food Example (9) | Chocolate-like Food Example (10) |
|---|---|---|---|---|
| Roasted powder used | Roasted Example 7 | Roasted Example 8 | Roasted Example 9 | Roasted Example 10 |
| Chocolate-like food flavor | 4 | 4 | 4 | 4 |
| Chocolate sensation | 4 | 4 | 4 | 4 |
| Overall evaluation | ⊚: Very good | ⊚: Very good | ⊚: Very good | ⊚: Very good |

All the chocolate-like foods shown in Table 7 had a moisture content of from 1.4 to 1.6 mass%.

Even when the type of saccharide used in roasting was changed, a good flavor was obtained.
o Study 4 - Change of Amino Acid
   • The same study as Study 1 was conducted using the amino acid (A) or (B) used in Study 1, with the amount thereof to be added being changed.

The moisture content of the mixture before roasting was from 13.0 to 18.0 mass%.
- Chocolate-like foods were prepared according to the typical formulation described in "● Method for Preparing Chocolate-like Food" presented above, and evaluated according to "● Method for evaluating Chocolate-like Food".

**[Table 8]**

| | Roasted Example 11 | Roasted Example 12 | Roasted Example 13 |
|---|---|---|---|
| Black turtle bean powder [parts] | 69.90 | 69.90 | 69.90 |
| Honey [parts] | 17.50 | 17.50 | 17.50 |
| Water [parts] | 10.50 | 10.50 | 10.50 |
| Lecithin [parts] | 2.10 | 2.10 | 2.10 |
| Amino acid (A) [parts] | 0.10 | 0.4 | 0.07 |
| Amino acid (B) [parts] | 0.10 | 0 | 0 |
| Moisture content [%] after roasting | 2.8 | 3 | 2.5 |
| L* value | ○: 50.79 | O: 46.83 | O: 51.75 |

**[Table 9]**

| | Chocolate-like Food Example (11) | Chocolate-like Food Example (12) | Chocolate-like Food Example (13) |
|---|---|---|---|
| Roasted powder used | Roasted Example 11 | Roasted Example 12 | Roasted Example 13 |
| Chocolate-like food flavor | 4 | 3 | 3 |
| Chocolate sensation | 4 | 3 | 3 |
| Overall evaluation | ⊚: Very good | O: Good | O: Good |

All the chocolate-like foods shown in Table 9 had a moisture content of from 1.4 to 1.6 mass%.

When the amount of the amino acid added was changed, the chocolate flavor was somewhat weakened, but an acceptable level of flavor was felt.
o Study 5 - Alkali Agent
   - Verification was carried out by adding an alkali agent during roasting. Four types of alkali agents shown in Table 10 were used and prepared so that the amount of the alkali agent(s) to be added was 2% relative to the amount of the ground legume product.

The moisture content of the mixture before roasting was from 13.0 to 18.0 mass%.
- Chocolate-like foods were prepared according to the typical formulation described in "● Method for Preparing Chocolate-like Food" presented above, and evaluated according to "● Method for evaluating Chocolate-like Food".

**[Table 10]**

| | Roasted Example 14 | Roasted Example 15 | Roasted Example 16 | Roasted Example 17 |
|---|---|---|---|---|
| Black turtle bean powder [parts] | 69.90 | 69.90 | 69.90 | 69.90 |
| Honey [parts] | 17.50 | 17.50 | 17.50 | 17.50 |
| Water [parts] | 10.50 | 10.50 | 10.50 | 10.50 |
| Lecithin [parts] | 2.10 | 2.10 | 2.10 | 2.10 |
| Amino acid (A) [parts] | 0.21 | 0.21 | 0.21 | 0.21 |
| Potassium carbonate | 1.40 | 0 | 0 | 0 |
| Sodium hydrogen carbonate | 0 | 1.40 | 0 | 0 |
| Calcium hydroxide | 0 | 0 | 1.40 | 0 |
| Sodium carbonate | 0 | 0 | 0 | 1.40 |
| Moisture content [%] after roasting | 4.0 | 3.5 | 3.2 | 3.7 |
| L* value | O: 51.34 | O: 46.95 | O: 49.59 | ○: 49.95 |
| pH | 6.48 | 6.51 | 6.68 | 6.83 |

**[Table 11]**

| | Chocolate-like Food Example (14) | Chocolate-like Food Example (15) | Chocolate-like Food Example (16) | Chocolate-like Food Example (17) |
|---|---|---|---|---|
| Roasted powder used | Roasted Example 14 | Roasted Example 15 | Roasted Example 16 | Roasted Example 17 |
| Chocolate-like food flavor | 5 | 5 | 4 | 5 |
| Chocolate sensation | 4 | 4 | 3 | 4 |
| Overall evaluation | ⊚: Very good | ⊚: Very good | O: Good | ⊚ : Very good |

All the chocolate-like foods shown in Table 11 had a moisture content of from 1.4 to 1.6 mass%.

The chocolate-like food using the legume-derived roasted powder had a flavor typical of chocolate although there was a slight difference depending on the type of alkali agent.

Study 6-Combination use with cocoa powder
- When a chocolate-like food was prepared using the legume-derived roasted powder material prepared in Roasted Example 1, cocoa powder was used in combination to confirm whether or not the legume-derived roasted powder material inhibited the flavor typical of chocolate of the cocoa powder.
- Chocolate-like foods were prepared according to **"●** Method for Preparing Chocolate-like Food" presented above in a blending ratio shown in Table 12, and evaluated according to "● Method for evaluating Chocolate-like Food".

**[Table 12]**

| | Chocolate-like Food Example (18) | Chocolate-like Food Example (19) | Chocolate-like Food Example (20) |
|---|---|---|---|
| Roasted Example 1 [parts] | 19.5 | 19.0 | 17.5 |
| Cocoa powder [parts] | 0.5 | 1.0 | 2.5 |
| Sugar [parts] | 35.0 | 35.0 | 35.0 |
| Vegetable oil and/or fat (A) [parts] | 45.0 | 45.0 | 45.0 |
| Lecithin [parts] | 0.15 | 0.15 | 0.3 |
| Chocolate-like food flavor | 4 | 5 | 5 |
| Chocolate sensation | 4 | 4 | 5 |
| Overall evaluation | ⊚: Very good | ⊚: Very good | ⊚: Very good |

It was found that the legume-derived roasted powder material can adjust the flavor in accordance with the amount thereof to be added without impairing the flavor of the cocoa powder.

### Industrial Applicability

According to the present invention, a chocolate-like food having an excellent flavor can be provided even with reduced components derived from cacao. In addition, it is possible to provide a legume-derived roasted powder that can be used for the chocolate-like food.

## Claims

1. A method for producing a legume-derived roasted powder for use in a chocolate-like food, the method comprising all of the following steps 1) to 3):
1) grinding a legume;
2) mixing a saccharide and an amino acid with water; and
3) adding a mixture of 2) to a ground legume product obtained in 1), stirring, and roasting.

2. A method for producing a chocolate-like food using the legume-derived roasted powder according to claim 1, the method further comprising the following step of:
4) mixing and refining the legume-derived roasted powder, a saccharide, and a molten oil and/or fat.

3. The method for producing a legume-derived roasted powder according to claim 1, wherein a moisture content of the legume-derived roasted powder before roasting is from 5 to 30 mass%.

4. The method for producing a legume-derived roasted powder according to claim 1, in the step 2) of mixing a saccharide and an amino acid with water, an alkali agent is mixed.

5. The method for producing a legume-derived roasted powder according to claim 1, wherein, in the step 3) of stirring a mixture containing a saccharide and an amino acid with a ground legume product, an oil and/or fat component is mixed, and the resulting mixture is roasted.

6. The method for producing a legume-derived roasted powder according to claim 1, wherein two or more amino acids are contained as the amino acid mixed in the step 2), and at least one of the amino acids is a hydrophobic amino acid.

7. The method for producing a legume-derived roasted powder according to claim 4 or 5, wherein two or more amino acids are contained as the amino acid mixed in the step 2), and at least one of the amino acids is a hydrophobic amino acid.

8. A method for producing a chocolate-like food using the legume-derived roasted powder according to claim 4 or 5, the method further comprising the following step of:
4) mixing and refining the legume-derived roasted powder, a saccharide, and a molten oil and/or fat.

9. A method for producing a chocolate-like food using the legume-derived roasted powder according to claim 6, the method further comprising the following step of:
4) mixing and refining the legume-derived roasted powder, a saccharide, and a molten oil and/or fat.

10. A method for producing a chocolate-like food using the legume-derived roasted powder according to claim 7, the method further comprising the following step of:
4) mixing and refining the legume-derived roasted powder, a saccharide, and a molten oil and/or fat.

11. The method for producing a chocolate-like food according to claim 2, wherein a content of fat-free cocoa solids is 0 mass% or more and less than 5 mass%.

12. The method for producing a chocolate-like food according to claim 2, wherein a content of fat-free cocoa solids is 0 mass% or more and less than 1 mass%.

13. The method for producing a chocolate-like food according to claim 8, wherein a content of fat-free cocoa solids is 0 mass% or more and less than 1 mass%.

14. The method for producing a chocolate-like food according to claim 9, wherein a content of fat-free cocoa solids is 0 mass% or more and less than 1 mass%.

15. The method for producing a chocolate-like food according to claim 10, wherein a content of fat-free cocoa solids is 0 mass% or more and less than 1 mass%.
